# EUROPÄISCHE PATENTANMELDUNG

(11) **EP 3 150 321 A1**
(43) Veröffentlichungstag der Anmeldung: **05.04.2017**
(21) Anmeldenummer: 15187542.4
(22) Anmeldetag: 30.09.2015
(51) Int. Cl.: B23K 5/18, B23K 10/02, B23K 26/00, F01D 25/24, B23K 26/342

(54) **VERFAHREN ZUR HERSTELLUNG EINES GEHÄUSES EINER TURBOMASCHINE**

(71) Anmelder: Siemens Aktiengesellschaft, 80333 München (DE)
(72) Erfinder: Bode, Ralf, 47441 Moers (DE); Naß, Dieter, 47447 Moers (DE)

(57) **Zusammenfassung**

Die Erfindung betrifft ein Verfahren zur Herstellung eines Gehäuses (C) einer Turbomaschine, insbesondere eines Gehäuses (C) eines Radialturboverdichters. Damit das Gehäuse günstiger, präziser und besonders belastbar wird, umfasst das Verfahren die folgenden Schritte:
a) Bereitstellen eines sich entlang einer Achse (X) erstreckenden in einer Umfangsrichtung geschlossenen Hohlkörpers (CY),
b) Beschichten auf der Innenseite des Hohlkörpers (CY) mit einer korrosionsbeständigen Schicht (LY), die korrosionsbeständiger ist als das Material des Hohlkörpers (CY),
c) Teilen des Hohlkörpers (CY) in zwei Halbschalen (HCY) entlang der Achse (X) in einer Teilfugenebene (SSP),
d) Montage des Gehäuses (C) durch Zusammenfügen der beiden Halbschalen (HCY) und Befestigung der beiden Halbschalen (HCY) im Bereich der durch Trennung entstandenen Teilfugen (SP) mittels lösbarer Befestigungselemente (FE).

## Beschreibung

Die Erfindung betrifft ein Verfahren zur Herstellung eines Gehäuses einer Turbomaschine, insbesondere eines Gehäuses eines Radialturboverdichters. Daneben betrifft die Erfindung das Gehäuse einer Turbomaschine hergestellt nach dem erfindungsgemäßen Verfahren.

Radial-Turboverdichter der Bauart, bei der eine Welle mit einem oder mehreren Verdichterlaufrädern zwischen zwei Lagern angeordnet ist ("Einwellenverdichter") weisen im Allgemeinen Gehäuse auf, die entweder durch eine horizontale oder eine vertikale Trennung gekennzeichnet sind. Sind diese Turboverdichter korrosiven Medien ausgesetzt, können die Gehäuse im Ganzen aus einem korrosionsbeständigen Werkstoff bestehen oder im medienberührten Bereich mit einem korrosionsbeständigen Werkstoff ausgekleidet oder beschichtet werden. Im Anlagenbau der chemischen Industrie und für die Öl- und Gasbranche ist es sehr verbreitet, eine korrosionsbeständige Schicht durch Auftragschweißen mit einer korrosionsbeständigen Legierung herzustellen. Je nach Korrosivität der einwirkenden Medien können das nichtrostende Stähle entsprechender Zusammensetzung oder auch Legierungen auf Nickelbasis sein. Während diese Vorgehensweise bei Verdichtergehäusen mit vertikaler Teilfuge mit hohem Automatisierungsgrad Anwendung findet, ergeben sich bei der Anwendung an Gehäusen mit horizontaler Teilfuge Schwierigkeiten wegen ihrer komplexeren Geometrie sowie der Neigung zu starken Verzügen auf Grund der Schweißspannungen.

Verdichter mit horizontaler Teilfuge werden entweder massiv aus einer korrosionsbeständigen Legierung hergestellt oder unter sehr großem Aufwand durch eine Kombination aus Auskleidung mit korrosionsbeständigen Blechen und Auftragschweißung geschützt. Dabei muss durch eine geeignete Schweißreihenfolge in Kombination mit einer gesteuerten Wärmeeinbringung beim Schweißen versucht werden, die Spannungen und damit die Verzüge zu minimieren.

Das Vorgehen, wie oben beschrieben ist zumindest teilweise bereits in der US2011/0232290A1 für ein Gehäuse mit vertikaler Teilfuge (Mantel-Deckel-Design) beschrieben.

Die geschilderten Nachteile und Schwierigkeiten lassen sich mittels des erfindungsgemäßen Verfahrens vermeiden.

Angaben, die sich auf eine Achse beziehen lassen, wie z. B. axial, tangential, radial oder Umfangsrichtung beziehen sich stets auf eine Achse bzw. Längsachse des Hohlkörpers nach Anspruch 1, sofern nicht anders angegeben. Der Hohlkörper ist charakterisiert durch einen sich entlang dieser Achse erstreckenden Hohlraum, wobei der Hohlraum insofern durch diese Achse gekennzeichnet ist, als dass der Radialturboverdichter einen Rotor aufweist, der die gleiche oder zumindest parallele axiale Erstreckung bzw. Drehachse aufweist. Dementsprechend ist regelmäßig, obgleich nicht zwingend, diese Achse des Hohlkörpers auch die längste räumliche Ausdehnung des Hohlkörpers bzw. des späteren Gehäuses nach Abschluss aller Fertigungsschritte. Bei Verdichtern, die weniger Stufen aufweisen und/oder einen größeren Laufraddurchmesser kann die axiale Ausdehnung des Hohlkörpers und des späteren Gehäuses auch geringer sein als die radiale Ausdehnung. Zwischen den einzelnen Schritten des erfindungsgemäßen Verfahrens können weitere Schritte vorgesehen sein, wobei dieses Verfahren mit den zusätzlichen Schritten, die nicht zwingend alle in dieser Schrift offenbart sein müssen, dennoch erfindungsgemäß ist. Entscheidend ist, dass alle erfindungsgemäßen Schritte in dem Fertigungsverfahren erfolgen.

Eine besonders vorteilhafte Weiterbildung der Erfindung sieht vor, dass der Hohlkörper hinsichtlich des Innenraums als Hohlzylinder ausgebildet ist, so dass der Hohlraum zylindrisch ist entlang der oben erläuterten Achse. Besonders zweckmäßig, insbesondere für eine automatisierte Beschichtung ist der Hohlkörper rotationssymmetrisch ausgebildet, so dass eine vollständige Automatisierung des Beschichtungsverfahrens besonders einfach erfolgen kann. Eine bevorzugte Variante der Beschichtung ist die Auftragschweißung.

Erfolgt die Beschichtung mittels einer Auftragschweißung oder eines anderen Verfahrens, das einen verhältnismäßig hohen Wärmeeintrag in das Grundmaterial des Hohlkörpers einbringt, ist es zweckmäßig, wenn nach dem Beschichten und vor dem Trennen des Hohlkörpers in zwei Halbschalen spannungsarm geglüht wird. Ein besonderer Vorteil der Erfindung liegt darin, dass der Hohlkörper, der in Umfangsrichtung während des Beschichtens, insbesondere während des Auftragschweißens geschlossen ausgebildet bleibt, infolge der in Umfangsrichtung geschlossenen Struktur sich kaum oder verhältnismäßig geringfügig verformt. Erfolgt im Anschluss an die Beschichtung ein Spannungsarmglühen, kann die Trennung in zwei Halbschalen ohne zusätzliche Verformung infolge von bereits vorhandenen Wärmespannungen stattfinden.

Das Trennen des Hohlkörpers in zwei Halbschalen kann vorteilhaft mittels eines Sägeschnitts, mittels Erodierens, mittels Brennens, mittels Wasserstrahlschneidens, mittels Laserstrahlschneidens oder mittels Elektronenstrahlschneidens erfolgen. Je nach gewähltem Trennverfahren unterscheidet sich das aufgrund der Trennung verloren gegangene Volumen im Bereich der sich damit ergebenden Teilfugenebene. Um den Verlust an dem Volumen durch die Trennung auszugleichen, kann vorteilhaft die Beschichtung bzw. eine Auftragschweißung im Inneren des Hohlkörpers vor dem Trennen mit einem entsprechenden Aufmaß erfolgen und eine nach dem Trennen sich anschließende mechanische Nachbearbeitung kann unter Ausnutzung des Aufmaßes den bevorzugten runden Durchmesser der beiden aneinander montierten Halbschalen wieder herstellen. Alternativ kann das durch die Trennung im Teilfugenbereich verloren gegangene Volumen an der Teilfuge auf mindestens einer Seite bzw. an mindestens einer Halbschale im Bereich der Teilfuge mittels eines additiven Fertigungsverfahrens wieder an die Halbschale angefügt werden, so dass sich schließlich wieder ein bevorzugt eine runde Kontur am Durchmesser des Innenraums ergibt.

Ein bevorzugtes additives Fertigungsverfahren ist hierbei das Auftragschweißen. Damit das Gehäuse auch im Bereich der Teilfuge korrosionsbeständig ist, kann die Auftragschweißung bzw. das additive Fertigungsverfahren in dem Bereich der Teilfuge zum Ausgleich des Volumenverlustes von der Trennung mit einem korrosionsbeständigen Beschichtungs- bzw. Auftragschweißmaterial erfolgen. Im Bereich der Teilfuge muss nicht über die gesamte Radialerstreckung der Teilfuge dieses korrosionsbeständige Beschichtungsmaterial benutzt werden. Ein Teil der Teilfuge, der im Betrieb nicht von dem korrosiv wirkenden Prozessmedium des angestrebten Einsatzes des Gehäuses erreicht werden kann, kann auch mit nicht korrosionsbeständigem Material beschichtet werden. Erfolgt die Beschichtung in dem Teilfugenbereich mittels Auftragschweißens, ist es zweckmäßig, wenn nach dem Auftragschweißen eine mechanische Bearbeitung zur Herstellung des Fertigmaßes erfolgt. Für die Herstellung eines hinreichend präzisen Durchmessers bei einer im Wesentlichen runden Querschnittsform des Innenraums des Gehäuses, ist es zweckmäßig, wenn dieser Innenraum nach der Beschichtung bzw. nach einem Auftragschweißen mit dem korrosionsbeständigen Beschichtungswerkstoff noch eine mechanische Nachbearbeitung erfährt.

Eine vorteilhafte Weiterbildung der Erfindung sieht vor, dass mindestens eine der beiden Halbschalen, je nach Bedarf, mit radialen Öffnungen für den Anschluss von Rohrleitungen in den Wandungen der Halbschalen versehen wird.

Im Folgenden ist die Erfindung anhand von Ausführungsbeispielen zum Zwecke der Erläuterung unter Bezugnahme auf Zeichnungen illustriert.

Es zeigen:
- Figur 1: einen schematischen Querschnitt durch einen vorbereiteten Hohlkörper eines erfindungsgemäßen Gehäuses ohne Korrosionsschutz,
- Figur 2: den Hohlkörper des erfindungsgemäßen Gehäuses nach Figur 1 nach einem Trennschnitt in der Teilfugenebene mit einem Stutzen aus nichtkorrosionsbeständigem Material mit einer korrosionsbeständigen Schicht LY,
- Figur 3: eine Darstellung wie Figur 2 nur mit einem Stutzen aus korrosionsbeständigem Material,
- Figur 4: die schematische Darstellung zweier aneinander befestigter Halbschalen, wobei die obere Halbschale für einen Stutzen vorbereitet ist,
- Figur 5: eine schematisch dargestellte Variante des Hohlkörpers ausgeführt mit rechteckigem Querschnitt,
- Figur 6: eine schematische Darstellung des Querschnitts der Figur 5 nach bereits erfolgter Vorbereitung des Gehäuses zum Zwecke der Verschraubung der beiden Halbschalen,
- Figur 7: eine schematische Darstellung der Ausbildung der Figur 6 in einer Draufsicht von radial oben,
- Figur 8: eine schematische Darstellung des Verfahrensablaufs.

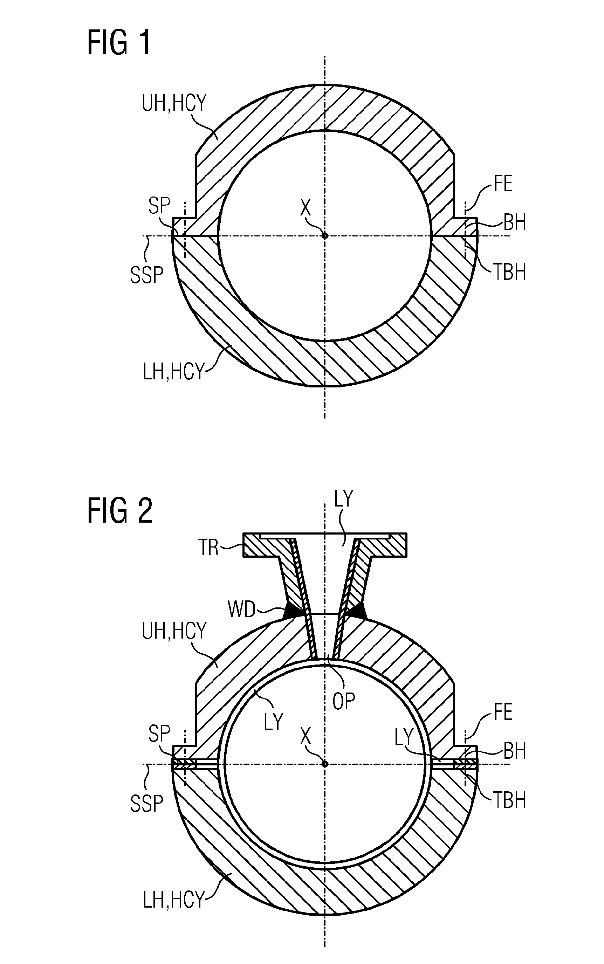

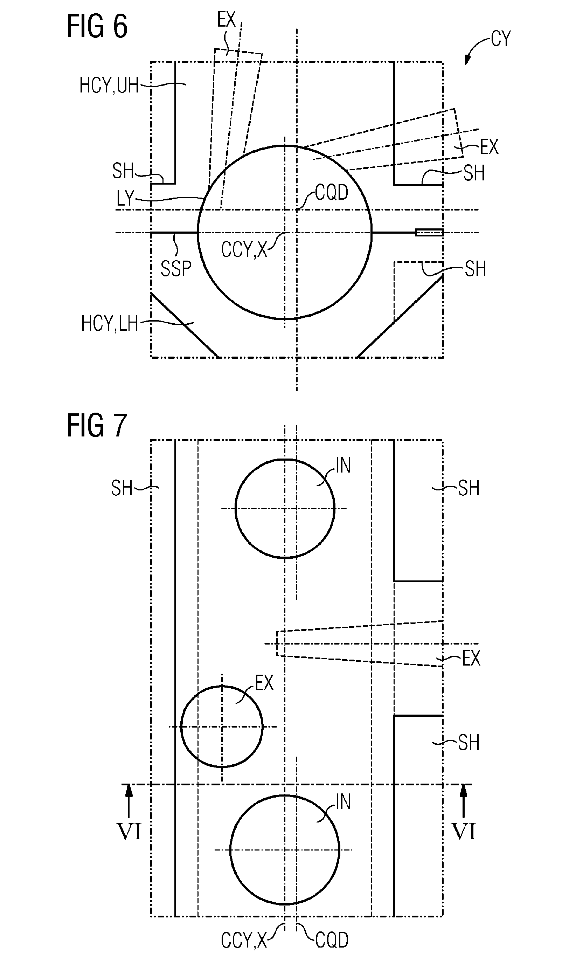

Die Darstellungen der Figuren sind jeweils schematisch und stark vereinfacht. Die Figuren 1 bis 6 zeigen jeweils eine axiale Sicht auf einen Querschnitt eines Höhlkörpers CY bzw. zweier Halbschalen HCY entlang einer Achse X. Figur 7 zeigt eine radiale Draufsicht in schematischer Form auf ein Gehäuse C, wie es in Figur 6 im Querschnitt wiedergegeben ist. Die Position des Querschnitts der Figur 6 ist in der Figur 7 mit VI angegeben.

Der in Figur 1 im Querschnitt dargestellte Hohlkörper CY ist bereits für die Anbringung von Befestigungselementen FE mittels Ausfräsungen in dem Oberteil UH vorbereitet. Die Befestigungselemente FE sollen bevorzugt als Schrauben ausgebildet werden. Die Position der Befestigungselemente FE für die spätere Montage ist schematisch mittels strichpunktierten Linien angedeutet. Nach einem nachfolgenden Beschichtungsschritt des Grundmaterials des Hohlkörpers mittels eines korrosionsbeständigeren Materials soll eine Teilung des Hohlkörpers CY in eine obere Hälfte UH bzw. Halbschale CY und eine untere Hälfte LH bzw. Halbschale HCY in einer Teilfugenebene SSP erfolgen, so dass eine Teilfuge SP entsteht. Die Befestigungselemente FE sollen dann, wie mittels der strichpunktierten Linien schematisch angedeutet, sich durch die obere Hälfte UH entlang eines Bohrlochs BH erstrecken und in einer Gewindebohrung TBH der unteren Hälfte LH eingeschraubt werden, so dass die an der oberen Hälfte UH angearbeiteten Anlageschultern SH geeignete Gegenlager sind für die Verspannung gegen die untere Hälfte LH mittels der Befestigungselemente FE in den Gewindebohrungen TBH.

Figur 2 zeigt eine Variante des Gehäuses C gemäß Figur 1 nach weiteren Verfahrensschritten. Die bereits mittels der für die beiden Halbschalen HCY unterschiedlichen Schraffur in Figur 1 angedeutete Teilung ist in der Figur 2 bereits vollzogen, nachdem eine Beschichtung mittels des korrosionsbeständigeren Materials als Schicht LY auf die Innenseite des Hohlkörpers CY aufgetragen worden ist. Dieser Auftrag erfolgte in diesem konkreten Ausführungsbeispiel mittels Auftragschweißens vor dem Trennen, wobei nach dem Auftragschweißen ein Spannungsarmglühen erfolgt ist, so dass die Trennung des Hohlkörpers CY in zwei Halbschalen HCY weitestgehend ohne Verzug erfolgen kann. Im Anschluss an die Trennung des Hohlkörpers CY wurde eine radiale Öffnung OP in die obere Hälfte UH eingebracht und ein Stutzen TR im Bereich der Öffnung OP mittels einer Schweißnaht WD angeschweißt. Der Stutzen TR ist auf der Innenseite der zur Strömungsführung vorgesehenen Oberfläche ebenfalls mit dem korrosionsbeständigeren Material in Form einer Schicht LY beschichtet, wobei der Stutzen TR eine Flanschfläche aufweist, die zumindest teilweise ebenfalls mit der Schicht LY versehen ist, so dass ein in der Flanschebene befindliches korrosives Prozessmedium im Betrieb des Radialturboverdichters diese Flanschflächen nicht beschädigen kann.

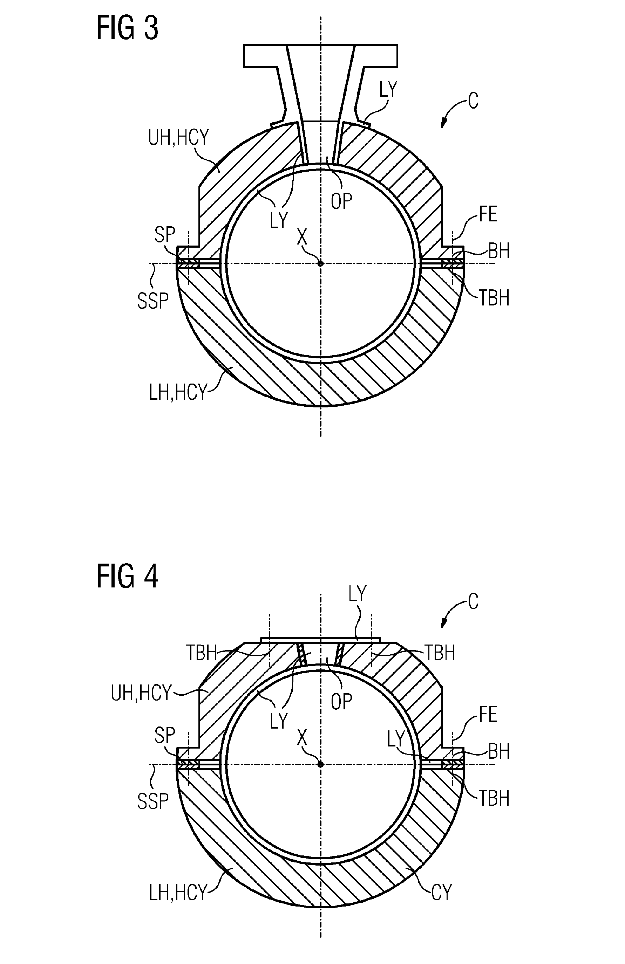

Als Alternative ist in der Figur 3 der gesamte Stutzen TR aus dem korrosionsbeständigerem Material hergestellt und mittels einer Schweißnaht WD an die obere Hälfte UH des Hohlkörpers CY befestigt im Bereich der Öffnung OP.

Figur 4 zeigt eine weitere Alternative für den Stutzen TR. Der Stutzen TR wird hier mittels Befestigungselementen FE, die als strichpunktierte Linien angedeutet sind, direkt an die obere Hälfte UH flanschartig angeschraubt. Zur Vorbereitung dieser Verbindung mit dem Stutzen TR ist die obere Hälfte UH im Bereich der Öffnung OP plangearbeitet und mit einer Schicht LY eines korrosionsbeständigeren Materials versehen.

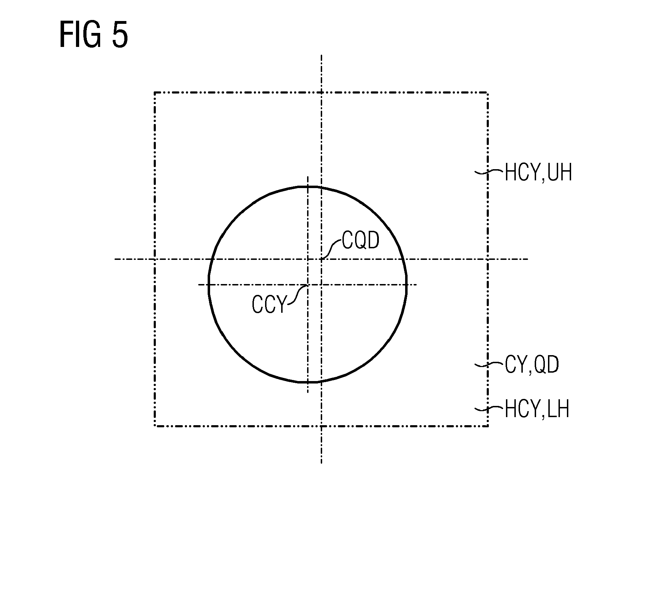

Figur 5 zeigt den schematischen Querschnitt durch ein quaderförmiges Rohteil QD bzw. ein Rohteil, das rechteckige Querschnitte aufweist. Dies entspricht dem bereits aus den anderen Ausführungsbeispielen bekannten Hohlkörper CY, wobei der hier rund dargestellte Hohlraum im Querschnitt mit seiner Querschnittsmitte CCY exzentrisch zu der Querschnittsmitte CQD des Rohteils QD angeordnet ist. Die Exzentrizität bezieht sich auf die Parallelverschiebung der beiden Achsen des Hohlraums und des Rohteils. Die aufgefädelten Querschnittsmitten entsprechen im Wesentlichen der Längserstreckung dieser beiden Geometrien, was in der Figur 7 anhand der Achse X ablesbar ist. Der exzentrische Versatz des Hohlraums in dem Rohteil QD ermöglicht die Fertigung von Eintrittsstutzen IN und Austrittsstutzen EX, wie in Figuren 6, 7 dargestellt. Im Bereich der Stutzen bietet das Rohlteil QD mehr Material, so dass hinreichend Flexibilität bei der Gestaltung der Stutzen EX, IN zur Verfügung steht. Vor der Trennung des Rohteils QD bzw. des Hohlkörpers CY erfolgt die Beschichtung des Innenraums mit der korrosionsbeständigeren Schicht LY, wie in Figur 6 dargestellt. Ggf. können auch vor der Trennung die inneren Oberflächen der Stutzen IN, EX beschichtet werden mit der Schicht LY. In der Teilfugenebene SSP erfolgt die Trennung des Rohteils QD bzw. des Hohlkörpers CY. In das Rohteil QD werden Schultern SH eingearbeitet, so dass diese als Gegenlager für Befestigungselemente FE dienen, die die beiden Halbschalen HCY aneinander fixieren in nicht näher dargestellter Art und Weise.

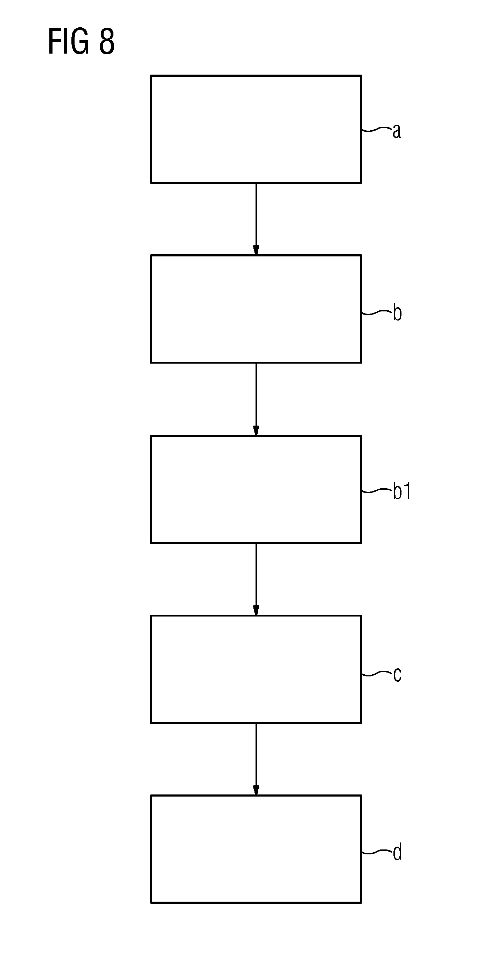

Figur 8 zeigt ein Ablaufdiagramm eines Verfahrens, das die erfindungsgemäßen Merkmale aufweist, zur Herstellung eines Gehäuses eines Radialturboverdichters, mit den folgenden Schritten:
a) Bereitstellen eines sich entlang einer Achse erstreckenden Hohlzylinders,
b) Auftragsschweißen auf der Innenseite des Hohlzylinders (ZY) einer korrosionsbeständigen Schicht, die korrosionsbeständiger ist als das Material des Hohlzylinders,
b1) spannungsarm glühen des Hohlzylinders
c) Teilen des Hohlzylinders in zwei Halbzylinder entlang der Achse,
d) Montage des Gehäuses durch Zusammenfügen der beiden Halbzylinder und Befestigung der beiden Halbzylinder im Bereich der durch Trennung entstandenen Teilfugen mittels lösbarer Befestigungselemente.

## Patentansprüche

1. Verfahren zur Herstellung eines Gehäuses (C) einer Turbomaschine, insbesondere eines Gehäuses (C) eines Radialturboverdichters, umfassend die folgenden Schritte:
a) Bereitstellen eines sich entlang einer Achse (X) erstreckenden in einer Umfangsrichtung geschlossenen Hohlkörpers (CY),
b) Beschichten auf der Innenseite des Hohlkörpers (CY) mit einer korrosionsbeständigen Schicht (LY), die korrosionsbeständiger ist als das Material des Hohlkörpers (CY),
c) Teilen des Hohlkörpers (CY) in zwei Halbschalen (HCY) entlang der Achse (X) in einer Teilfugenebene (SSP),
d) Montage des Gehäuses (C) durch Zusammenfügen der beiden Halbschalen (HCY) und Befestigung der beiden Halbschalen (HCY) im Bereich der durch Trennung entstandenen Teilfugen (SP) mittels lösbarer Befestigungselemente (FE).

2. Verfahren nach Anspruch 1,
wobei mittels mechanischer Bearbeitung, insbesondere spanende Bearbeitung, die beiden Halbschalen (HCY) im Bereich der Trennebene vor und/oder nach dem Trennen flanschartig vorbereitet werden, so dass eine Befestigung der beiden Halbschalen (HCY) aneinander mittels der Befestigungselemente (FE) in Schritt d) vorbereitet ist.

3. Verfahren nach mindestens einem der Ansprüche 1, 2,
wobei der Hohlkörper (CY) als Hohlzylinder ausgebildet ist.

4. Verfahren nach mindestens einem der Ansprüche 1, 2, 3,
wobei der Hohlkörper (CY) rotationsymmetrisch ausgebildet ist.

5. Verfahren nach mindestens einem der Ansprüche 1 bis 4,
wobei die Beschichtung als Auftragschweißung durchgeführt wird.

6. Verfahren nach Anspruch 5,
wobei die Auftragschweißung automatisiert durchgeführt wird.

7. Verfahren nach mindestens einem der vorhergehenden Ansprüche 5 bis 6,
wobei der Hohlkörper (CY) nach dem Auftragschweißen (Schritt d) und vor dem Trennen (Schritt c) spannungsarm geglüht wird.

8. Verfahren nach mindestens einem der vorhergehenden Ansprüche 1 bis 7,
wobei die Teilung des Hohlkörpers (CY) in zwei Halbschalen (HCY) mittels einer anderen spanenden Bearbeitung insbesondere mittels eines Sägeschnitts, mittels Erodierens, mittels Brennens, mittels Wasserstrahlschneidens, mittels Laserstrahlschneidens oder mittels Elektronenstrahlschneidens erfolgt.

9. Verfahren nach mindestens einem der vorhergehenden Ansprüche 1 bis 8, wobei das durch die Teilung des Hohlkörpers (CY) im Bereich der Teilfugenebene (SSP) verlorengegangene Volumen (LV) mit einem entsprechenden Aufmaß der Auftragschweißung im Inneren des Hohlkörpers und anschließender mechanischer Nachbearbeitung des Durchmessers des von den beiden Halbschalen (HCY) gebildeten Hohlkörpers (CY) nach der Teilung ausgeglichen wird.

10. Verfahren nach mindestens einem der vorhergehenden Ansprüche 1 bis 9,
wobei ein durch die Teilung des Hohlkörpers (CY) verloren gegangenes Volumen im Bereich der Teilfugenebene (SP) ausgeglichen wird mittels einer Auftragschweißung an mindestens einem der beiden sich gegenüberliegenden Schnittufer der Halbschalen (HCY), die die Teilfuge (SP) bilden.

11. Verfahren nach mindestens einem der vorhergehenden Ansprüche,
wobei nach der Teilung des Hohlkörpers (CY) radiale Öffnungen (OP) für den Anschluss von Rohrleitungen in den Wandungen der Halbschalen (HCY) vorgesehen werden.

12. Verfahren nach mindestens einem der vorhergehenden Ansprüche 5 bis 7,
wobei für die Auftragschweißung ein nichtrostender Stahl oder eine Legierungen auf Nickelbasis verwendet wird.

13. Gehäuse (C) einer Turbomaschine,
insbesondere eines Gehäuses (C) eines Radialturboverdichters, hergestellt nach dem Verfahren nach mindestens einem der vorhergehenden Ansprüche.
